(19) Europäisches Patentamt
European Patent Office
Office européen des brevets

(11) **EP 4 530 673 A1**

(12) **EUROPEAN PATENT APPLICATION**

(43) Date of publication:
**02.04.2025 Bulletin 2025/14**

(21) Application number: **23200878.9**

(22) Date of filing: **29.09.2023**

(51) International Patent Classification (IPC):
*G01S 13/90* (2006.01)    *G01S 7/00* (2006.01)

(52) Cooperative Patent Classification (CPC):
**G01S 13/9021; G06F 16/29;** G01S 7/003

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Iceye Oy**
**02150 Espoo (FI)**

(72) Inventor: **MUFF, Darren**
**02150 Espoo (FI)**

(74) Representative: **Forresters IP LLP**
**Skygarden**
**Erika-Mann-Straße 11**
**80636 München (DE)**

(54) **GENERATING SYNTHETIC APERTURE RADAR IMAGE DATA**

(57)    A method of generating synthetic aperture radar (SAR) image data includes obtaining SAR data and generating, based on the SAR data, the SAP image data. For each of a number of pixels, based on the SAR data, an amplitude value and a phase value are determined.

The SAR image data is generated by storing in a non-transitory, computer-readable storage medium an amplitude data band comprising, for each pixel, the amplitude value of the pixel, and a phase data band comprising, for each pixel, the phase value of the pixel.

**FIG. 6B**

## Description

## Field

The present disclosure relates to data processing and in particular to methods of generating synthetic aperture radar image data, as well as computer-readable media storing the same.

## Background

SAR is a type of imaging technology that can be used for a variety of applications such as Earth observation, mapping, object tracking, change detection (e.g., in arctic ice), natural catastrophe monitoring, and many others. SAR images are a type of image created by transmitting radar signals, receiving the reflected and scattered radar return signals, and processing the return signals in order to form the image. This is in contrast to optical imagery, a passive technology wherein images are captured by receiving light reflected or originating from an object. SAR technology, on the other hand, is an active rather than a passive technology since it relies on transmitting a radar signal instead of relying on sunlight or other light sources. A significant advantage of SAR technology over optical imagery is that SAR technology can image at night as well as through clouds and other adverse weather conditions. However, forming an image using SAR technology is generally more complex and generally requires significant signal processing of the returned echoes in order to generate the image.

More particularly, SAR images are acquired from a moving transceiver, such as a transceiver that comprises part of a satellite. In conventional radar, the spatial resolution of an image generated by measuring reflections of a radar signal is directly proportional to the bandwidth of the radar signal and inversely proportional to the dimensions of the antenna used to transmit and receive the radar signal. In other words, the larger the antenna, the finer the detail. This means that the length and height of the antenna that would be required to capture high-resolution images using conventional radar are often impractical, particularly for airborne and space use.

In contrast, SAR images are captured using a "synthetic aperture". A smaller and consequently more practical antenna is used on a moving platform to make a series of measurements of reflected radar signals, and those measurements are combined to simulate a much larger antenna. This is achieved by exploiting the Doppler effect created by the moving SAR platform. Consequently, the resolution of a SAR image corresponds to the resolution of a conventional radar image captured using an antenna much larger than the one used to capture the SAR image.

Depending on the size of the target location that is being imaged, the return signals that are received at the SAR receiver can contain a lot of information. It can therefore be difficult and time-consuming to process the full contents of the SAR image data that is generated based on these return signals.

## Summary

According to a first aspect of the disclosure, there is provided a method of generating synthetic aperture radar (SAR) image data, comprising: obtaining SAR data; and generating, based on the SAR data, the SAR image data, comprising: for each of a number of pixels, determining, based on the SAR data, an amplitude value and a phase value; and generating the SAR image data by storing in a non-transitory, computer-readable storage medium: an amplitude data band comprising, for each pixel, the amplitude value of the pixel; and a phase data band comprising, for each pixel, the phase value of the pixel.

The SAR data may comprise, for each pixel, a quadrature component and an in-phase component. Determining the amplitude value and the phase value may comprise, for each pixel, determining, based on the quadrature component and the in-phase component, the amplitude value and the phase value.

Determining the amplitude value may comprise determining $\sqrt{|I|^2 + |Q|^2}$, wherein I is the in-phase component of the pixel and Q is the quadrature component of the pixel.

Determining the phase value may comprise determining $\tan^{-1}\left(\frac{Q}{I}\right)$.

Storing the SAR image data may comprise storing the amplitude data band and the phase data band in a container configured to be read by a geographic information system (GIS) software application.

The container may be a GeoTIFF container.

The GIS software application may be one selected from the group consisting of: Quantum GIS (QGIS); ArcGIS; Photoshop; SocketGXP; RemoteView; and Erdas Imagine.

Obtaining the SAR data may comprise: emitting radar signals from a SAR radar to image a target location on the Earth's surface; receiving reflected and backscattered returns of the radar signals; and generating the SAR data based on the reflected and backscattered returns.

The method may further comprise: transferring the SAR image data from a first computing device to a second computing device; generating, using the second computing device and based on the SAR image data, a SAR image; and displaying the SAR image on a display of the second computing device.

The method may further comprise: generating, based on the amplitude data band and using a geographic information system (GIS) software application, a SAR image; and displaying the SAR image on a display.

The method may further comprise performing, based on the phase data band, one or more of: moving target detection; smear removal; and target refocusing.

Displaying the SAR image may comprise displaying the SAR image at a first resolution. In response to receiving a request to zoom into the SAR image, the method may further comprise displaying, using the GIS software application, a portion of the SAR image at a second resolution that is higher than the first resolution.

Displaying the SAR image may comprise displaying a first portion of the SAR image with a first degree of speckle. In response to receiving a request to zoom out of the first portion of the SAR image, the method may further comprise displaying, using the GIS software application, a second portion of the SAR image, wherein the second portion comprises the first portion and is displayed with a second degree of speckle that is less than the first degree of speckle.

The SAR data may further comprise one or more rapid processing coefficients for projecting each pixel from a slant plane to a ground plane. Generating the SAR image may comprise: generating, based on the SAR image data, a SAR image in the slant plane; and converting, based on the one or more rapid processing coefficients, the SAR image in the slant plane into a SAR image in the ground plane.

According to a further aspect of the disclosure, there is provided a non-transitory, computer-readable medium storing synthetic aperture radar (SAR) image data comprising: an amplitude data band comprising, for each pixel of a SAR image, an amplitude value; and a phase data band comprising, for each pixel of the SAR image, a phase value, wherein each data band is stored in a container configured to be read by a geographic information system (GIS) software application.

The container may be a GeoTIFF container.

The SAR image data may further comprise one or more rapid processing coefficients for projecting each pixel from a slant plane to a ground plane.

According to a further aspect of the disclosure, there is provided a method of displaying a SAR image using a geographic information system (GIS) software application, comprising: receiving synthetic aperture radar (SAR) image data stored in a container configured to be read by the GIS software application, wherein the SAR image data comprises: an amplitude data band comprising, for each pixel of the SAR image, an amplitude value; and a phase data band comprising, for each pixel of the SAR image, a phase value; selecting, using the GIS software application, the amplitude data band or the phase data band; and using the GIS software application to display, based on the selected data band, the SAR image.

This summary does not necessarily describe the entire scope of all aspects. Other aspects, features, and advantages will be apparent to those of ordinary skill in the art upon review of the following description of specific embodiments.

**Drawings**

Embodiments of the disclosure will now be described in detail in conjunction with the accompanying drawings of which:

FIG. 1 is a schematic diagram of a SAR satellite orbiting the Earth, according to an embodiment of the disclosure;

FIG. 2 is a schematic diagram of a ground station relaying SAR image data from a SAR satellite to a SAR processing station, according to an embodiment of the disclosure;

FIG. 3 is a schematic diagram of a computing device configured to process and generate SAR image data, according to an embodiment of the disclosure;

FIGS. 4A-4E show respective imaginary, real, amplitude, and phase components of a SAR image, and a phase diagram illustrating the relationship between the imaginary, real, amplitude, and phase components, according to an embodiment of the disclosure;

FIGS. 5A and 5B respectively show a Ground Range Detected (GRD) image and a SAR image generated from SAR image data according to an embodiment of the disclosure;

FIGS. 6A and 6B respectively show a portion of a multilooked GRD image and a corresponding portion of a SAR image generated from SAR image data according to an embodiment of the disclosure; and

FIGS. 7A and 7B show respective amplitude and phase components of a SAR image, according to an embodiment of the disclosure.

**Detailed Description**

The present disclosure seeks to provide novel methods of generating SAR image data, and novel computer-readable media storing the same. While various embodiments of the disclosure are described below, the disclosure is not limited to these embodiments, and variations of these embodiments may well fall within the scope of the disclosure which is to be limited only by the appended claims.

Some SAR images are conventionally stored in a scientific data container (e.g., hdf5), for example in the commonly-used Single Look Complex (SLC) format, and represented with each stored pixel having two separate values: an in-phase (I) or "real" component, and a quadrature (Q) or "imaginary" component (for this reason, such images may be referred to as "complex" SAR images). As a result, in order to view such images, not only must users generally employ a specialized scientific viewing tool, but "band math" conversion is required to render the complex SAR image data into a viewable image. This conversion is time-consuming and requires calculating $\sqrt{|I|^2 + |Q|^2}$ for each pixel. For example, modern SAR images can contain many gigabytes of data (e.g., 5 GB or more). Opening such large files using existing scientific viewing tools developed for SAR, such as the Sentinel Application Platform (SNAP) developed by the European Space Agency, can take 20 minutes or more due to the processing required to generate a viewable image.

These factors cause most SAR image exploiters to rely instead on Ground Range Detected (GRD) images which are multilooked, lower-resolution, and do not allow the user to exploit the phase information contained in the SAR image data. In the context of SAR imaging, "multilooking" refers to a processing technique used to reduce certain types of noise and speckle. Initially, SAR systems produce a single-look image, meaning that, for each pixel in the image, only one radar measurement is used. Speckle noise is more pronounced in single-look images. In multilook processing, multiple radar measurements ("looks") are averaged or combined for each pixel in the image. The number of looks, or the size of the "look window", can vary depending on the processing parameters and the desired trade-off between image quality and spatial resolution. With GRD images, processing time and speckle are reduced but at the cost of losing full resolution and phase information. Therefore, according to embodiments of the disclosure, there is described a new file format allowing a user to view SAR imagery much more quickly and simply by using their conventional image exploitation / Geographic Information System (GIS) toolset. Furthermore, according to embodiments of the disclosure, the SAR imagery may retain all of the information contained in the original SAR data used to generate the image, including both amplitude data and phase data at the original resolution. The image is also presented in such a way that it appears as a normal SAR image but allows the user to zoom into the image to see the full resolution of the image (rather than presenting the image as a multilooked image), while also allowing the user to zoom out of the image to view the image with reduced speckle, similar to multi-looking. Furthermore, the file format allows the user to manipulate the phase information contained in the image data, for additional SAR exploitation capabilities such as for interferometric SAR (InSAR) purposes (e.g., performing moving target detection, smear removal, and target refocusing).

According to embodiments of the disclosure, a method of generating synthetic aperture radar (SAR) image data comprises obtaining SAR data. The SAR data may include raw SAR data, SAR data stored as complex numbers, and/or pre-processed SAR data stored in complex form (e.g., in the SLC format). The method further comprises generating, based on the SAR data, the SAR image data. In particular, for each of a number of pixels, an amplitude value and a phase value are determined based on the SAR data. An amplitude data band comprising, for each pixel, the amplitude value of the pixel, and a phase data band comprising, for each pixel, the phase value of the pixel, are then stored in a non-transitory, computer-readable storage medium.

For example, the amplitude and phase data bands may be stored in a container, such as a GeoTIFF container, configured to be read by a GIS software application. As a result, a user may relatively conveniently and quickly view the SAR image based on whether the user has selected the amplitude band or the phase band. In addition, there is no need for the GIS software application to laboriously calculate the amplitude value and phase value for each pixel, since such values are pre-stored in the container.

Detailed embodiments of the disclosure will now be described in connection with the drawings.

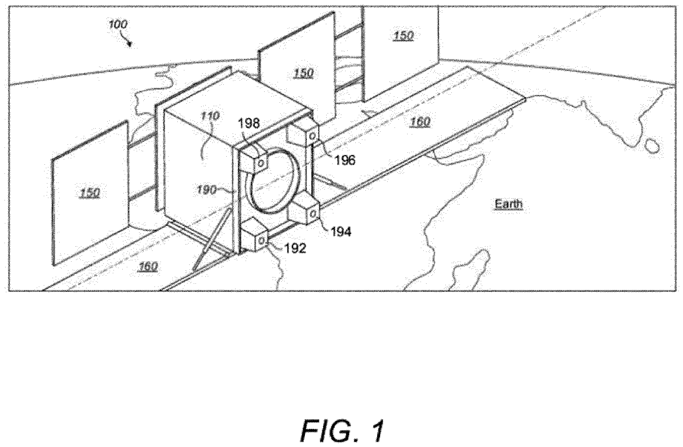

FIG. 1 depicts an exemplary satellite 100 in orbit around the Earth of the kind which may be used in the implementation of methods described herein. Satellite 100 comprises a body 110 which may be referred to in the art as a "bus" since it may house or support so-called bus components of a satellite. Body 110 may additionally house one or more batteries.

Body 110 may be partially enclosed, for example to house and protect components. A housing may provide surfaces on which components may be mounted. In the example of FIG. 1, a solar panel is mounted on one rectangular surface of body 110 and additional solar panels 150 may be attached to this solar panel by struts.

Satellite 100 comprises a radar antenna array 160 in the form of a generally planar structure extending from bus 110 in two opposing directions to provide two "wings". The structure comprising wings 160 is shown to be mounted on or adjacent to a rectangular surface of body 110. Body 110 and wings 160 of satellite 100 may be collectively referred to as the spacecraft frame. Antenna array 160 together with associated amplifiers and a power distribution system (not shown) collectively form an image acquisition apparatus of satellite 100.

In a synthetic aperture radar system (SAR system), antenna array 160 is operated to transmit radar signals to the Earth and receive returning echoes or reflections of these signals. By recording the echoes, an image of the Earth's surface can be constructed from the data, including the length of time taken for the echo to return (indicating location), the amplitude of the radar return, and the phase information that is included within the radar return. Further location information is obtained from the frequency of the radar return which is shifted due to the Doppler effect as a result of the motion of satellite 100 relative to the Earth.

Satellite 100 is provided with a propulsion system 190 for manoeuvring satellite 100 with a generated thrust. Propulsion system 190 comprises a plurality of thrusters 192, 194, 196, 198 that produce thrust for manoeuvring satellite 100 when required, for example to position satellite 100 onto a different orbital track. Thrusters 192, 194, 196, 198 shown in FIG. 1 are positioned at the corners of one side of body 110 and may be equally spaced apart. However, in other embodiments, propulsion system 190 may have a different configuration.

In some embodiments, satellite 100 may be orbiting Earth in a low-earth orbit. A low-earth orbit may have an altitude between 160 kilometres and 1,000 kilometres above the surface of the Earth. Examples of Earth-observation satellites operating SAR payloads can accordingly have orbits with an altitude of between 450 kilometres and 650 kilometres above the Earth. In one particular example, a SAR satellite may have an orbit that is approximately 550 kilometres above the Earth's surface. At an orbit of 550 kilometres above the Earth, the satellite may be effectively traversing the ground at approximately 7.5 kilometres per second, or 27,000 kilometres per hour. Most satellites in such an orbit will traverse the Earth at a speed that is in the range of 7-8 kilometres per second.

As a SAR satellite operates its SAR payload and receives radar returns, it accumulates raw "SAR data". Raw SAR data generally comprises the recorded radar signals as they are received by the SAR sensor. As described above, these signals are typically represented as complex-valued numbers, where each complex value consists of two components: the in-phase (I) component and the quadrature (Q) component. SAR data is typically received and processed in I and Q channels, and therefore it is traditional to represent SAR data in this form. These components correspond to the real and imaginary parts of the complex number and contain the information necessary to derive the amplitude and phase of the received radar signal, as also described above. In order to construct an image corresponding to the SAR data, the data must be processed. While in theory the data may be processed by any suitable computer processor, even a computer processor onboard the satellite, it is more typical for the raw SAR data to be first transmitted or downlinked from the SAR satellite to a ground station on the Earth's surface. The data can be downlinked whenever the SAR satellite has line of sight to the ground station. The downlinked SAR data is then typically relayed to a SAR processing station which performs the necessary processing of the SAR data, as now described in further detail.

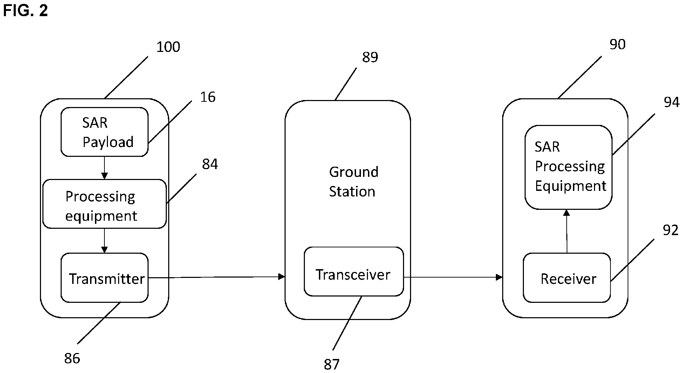

In particular, referring to FIG. 2, there is shown a schematic diagram of hardware components onboard satellite 100 being used to allow satellite 100 to communicate with a SAR processing station 90 on the Earth's surface. SAR processing station 90 houses the computer hardware components that are used to process the SAR data and generate the SAR images, as described in further detail below. Typically, satellite 100 will first downlink the SAR data to a ground station 89, and ground station 89 will relay (using a wired or wireless communication link) the downlinked SAR data to SAR processing station 90. However, it is possible, according to some embodiments, for ground station 89 to process the SAR data, in which case ground station 89 effectively performs the function of SAR processing station 90. SAR processing station 90 can be an office, an operations station, or any other location comprising any computer device (such as a laptop) capable of processing the SAR data. The SAR processing may also be carried out using cloud computing, for example through the use of multiple processors operating in parallel, in which case SAR processing station 90 is the location at which the SAR data is received and passed to the cloud.

Generally, satellite 100 includes a SAR payload 16 (e.g., comprising antenna array 160), satellite processing equipment 84, and a transmitter 86. Meanwhile, SAR processing station 90 includes a receiver 92 and SAR processing equipment 94. Satellite processing equipment 84 and SAR processing equipment 94 comprise suitable computer processors, comprising circuitry, and computer-readable media configured to perform various functions as described herein. Ground station 89 includes a transceiver 87 (or a separate transmitter and receiver) for relaying the SAR data from satellite 100 to SAR processing station 90. For example, relaying the SAR data from ground station 89 to SAR processing station 90 can be performed through a wired or wireless terrestrial network. According to some embodiments, if satellite 100 is not in direct communication with ground station 89, the SAR data can be relayed to ground station 89 via another satellite or an aircraft.

During operation, data captured by SAR payload 16 is passed to satellite processing equipment 84 for pre-processing (which may include, for example, basic compression/encoding/packaging). Following pre-processing, the pre-processed data is passed to transmitter 86 which transmits or otherwise downlinks the data to transceiver 87 of ground station 89. Transceiver 87 of ground station 89 then relays the SAR data to receiver 92 of SAR processing station 90. Receiver 92 passes the data to SAR processing equipment 94 which processes the data as described in more detail below.

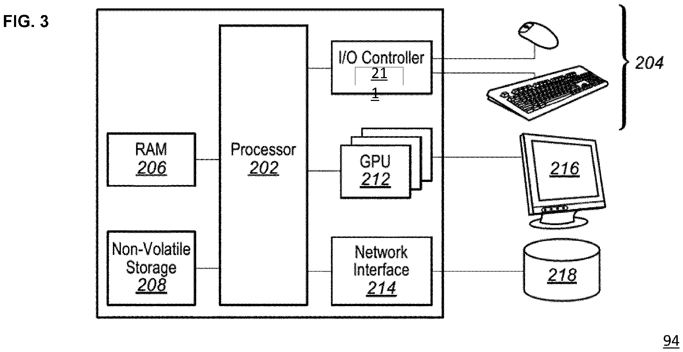

Turning to FIG. 3, there is shown an example of hardware components in SAR processing equipment 94. In particular, a computer system 200 comprises a processor 202 that controls computer system's 200 overall operation. Processor 202 is communicatively coupled to and controls several subsystems. These subsystems comprise an input/output ("I/O") controller 211, which is communicatively coupled to user input devices 204. User input devices 204 may comprise, for example, any one or more of a keyboard, mouse, touch screen, and microphone. The subsystems further comprise random access memory ("RAM") 206 which stores computer program code for execution at runtime by processor 202; non-volatile storage 208 which stores the computer program code executed by RAM 206 at runtime; graphical processing units ("GPU") 212 which control a display 216; and a network interface 214 which facilitates network communications with a database 218. Non-volatile storage 208 has stored on it computer program code that is loaded into RAM 206 at runtime and that is executable by processor 202. When the computer program code is executed by processor 202, processor 202 causes computer system 200 to implement a method of generating SAR image data, such as described herein. Additionally or alternatively, multiple of computer systems 200 may be networked together and collectively perform that method using distributed computing.

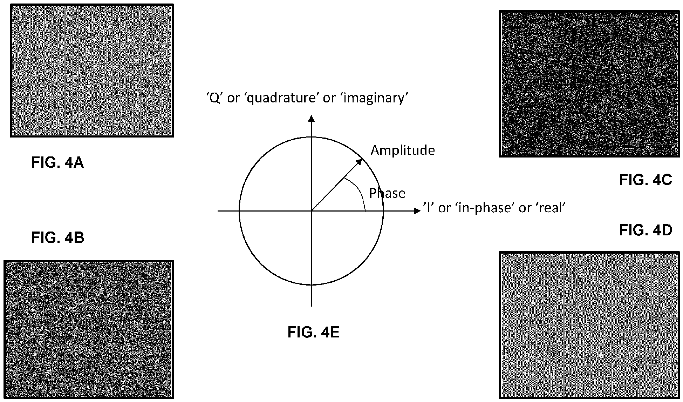

Turning to FIGS. 4A-4E, there are shown respective imaginary (Q), real (I), amplitude, and phase components of a SAR image, and a phase diagram illustrating the relationship between the imaginary (Q), real (I), amplitude, and phase components. In particular, FIGS. 4A-4D show images with each pixel associated with a respective quadrature value, in-phase value, amplitude value, and phase value.

As can be seen from FIG. 4E, the amplitude of the signal represents the magnitude, or strength, of the radar signal being measured and can be derived from the real (I) and imaginary (Q) components of the SAR signal. The amplitude is equal to $\sqrt{|I|^2 + |Q|^2}$, wherein I is the in-phase or real component, and Q is the quadrature or imaginary component. When viewing a traditional SAR image, it is typical for the image to be displayed in terms of the amplitude value associated with each pixel. However, complex SAR image data further includes a phase value for each pixel. As can be seen from FIG. 4E, the phase value is equal to $\tan^{-1}\left(\frac{Q}{I}\right)$. Phase information (unlike amplitude information), while not allowing for a faithful visual reproduction of the image (e.g., raw phase data generally appears as static, as can be seen in FIG. 4D), contains very useful information about the area being imaged and is especially useful when used in applications such as interferometric SAR (InSAR) applications, for example. Other uses of phase information are also possible. Conceptually, the phase value of the returned signal is indicative of the fraction of a full wavelength of the signal remaining if the distance from the SAR radar transmitter to the target location, and then back to the SAR transmitter, is divided by the signal's wavelength. It can be seen from FIGS. 4A-4D that the only component that can be viewed as a meaningful image is the amplitude component, as shown in FIG. 4C. The real (I), imaginary (Q), and phase components all appear as meaningless static when viewed as an image.

According to embodiments of the disclosure, SAR processing equipment 94 is configured to generate SAR image data by processing the SAR data relayed to it by ground station 89. In particular, for each pixel of the image, the amplitude value and the phase value are determined by respectively calculating $\sqrt{|I|^2 + |QI|^2}$ and $\tan^{-1}\left(\frac{Q}{I}\right)$. The determined values are then stored in a multiband format (akin to an RGB image), i.e., with the first band being amplitude and the second band being phase. The amplitude and phase data bands are then stored in a container, such as a GeoTIFF container, configured to be read by a traditional GIS software application.

The container storing the SAR image data may additionally include metadata including rapid processing coefficients (RPCs). RPCs are equations or other relationships that are used to map the image from a first viewing plane (such as a slant plane) to a second viewing plane (such as a ground plane). GIS viewers can therefore extract the SAR image that is initially displayed in the slant plane and, using the RPCs, convert or otherwise project the SAR image onto the ground plane, by mapping each pixel from the slant plane to the ground plane. This means that the SAR image, despite being distorted if viewed as a flat array, appears as a true representation of the SAR image on the ground when viewed in the GIS viewer.

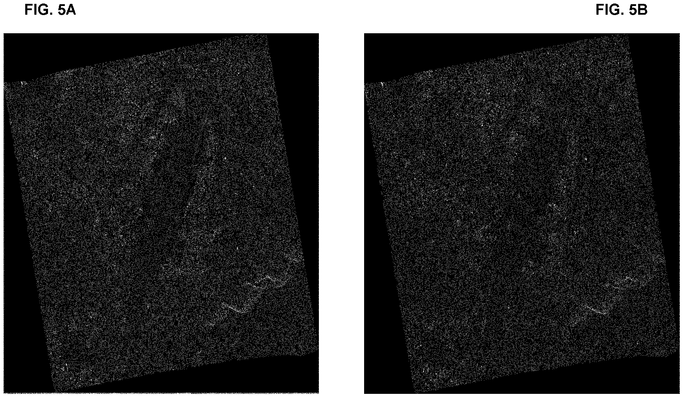

FIGS. 5A and 5B illustrate respectively a Ground Range Detected (GRD) image and a SAR image generated using the amplitude band of SAR image data generated according to an embodiment of the disclosure. As can be seen, the images are geometrically identical. Traditional Single Look Complex (SLC) images are only in the slant plane and typically need to be separately processed to project them onto the ground plane, adding time and complexity to the data processing, and requiring special tools. Although the image in FIG. 5B is also generated from complex SAR image data in the slant plane, a modern GIS viewer, using the associated RPC data, can automatically and correctly project the image to the selected projection (e.g., to the ground plane). Furthermore, although the image in FIG. 5B is also based on a single look, the GIS viewer can perform Lanczos averaging, when rendering the image, in order to make the projection correct-this is mathematically identical to a multilook process implemented in a SAR processor configured to generate a GRD image from the SAR data. In other words, according to embodiments of the disclosure, instead of the SAR processor performing the conversion, the GIS viewer is performing the conversion.

According to some embodiments, SAR processing station 90 may transmit (using, for example, a wired or wireless communication medium) the packaged image data to an end user for viewing on their personal computing device, by using a traditional GIS software application such as Quantum GIS (QGIS), ArcGIS, Photoshop, SocketGXP, RemoteView, or Erdas Imagine. For example, an end user requesting to view a SAR image of a target location may receive, from SAR processing station 90, a SAR image data file generated at SAR processing station 90 as described above. The SAR image data file may be opened, and the corresponding SAR image viewed, by the GIS software application, without the need for further processing.

The resulting image file format is therefore configured for relatively convenient and rapid viewing by the GIS software application. Furthermore, the SAR image may be viewed based on either the amplitude data band (and the SAR image may therefore be viewed similarly to how a traditional GRD image is viewed) or the phase data band, although the phase data band may not have meaning when viewed as an image. In particular, the first, amplitude band may be conventionally displayed using a GIS viewer to display the SAR image as a function of the amplitude value of each pixel. The information in the second, phase band can just as easily be accessed (without the need for the GIS viewer to compute the phase value of each pixel from its associated in-phase and quadrature components). The phase information may be particularly useful for InSAR applications, such as any of the ones described in co-pending UK patent application no. 2212690.8, filed on August 31, 2022, and entitled "Fluid Storage Monitoring", the contents of which are hereby incorporated by reference in their entirety.

Existing GIS viewers are able to resample images on-the-fly, as the user is operating the interface. Therefore, according to embodiments of the disclosure, when the user zooms out of the displayed SAR image, the image is automatically resampled, with the GIS viewer averaging the amplitude values of pixels that are individually smaller than a single screen pixel. This has the effect of "multilooking" the image, reducing speckle and making the image appear as a GRD image.

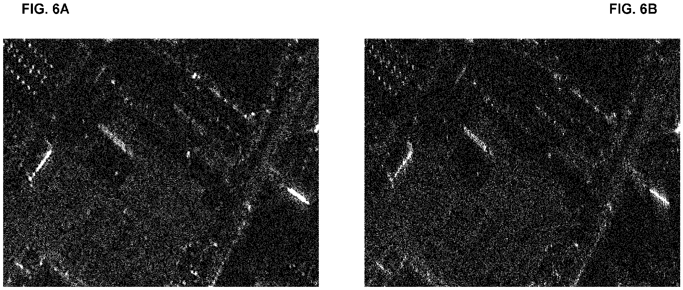

FIGS. 6A and 6B show identical portions of a SAR image (i.e., in both FIGS. 6A and 6B, the user has zoomed into the SAR image to view a select portion of the image). However, FIG. 6A corresponds to a GRD image portion and shows the image portion at 1 m x 1 m resolution, while FIG. 6B corresponds to an image portion generated using SAR image data according to an embodiment of the disclosure, and shows the image portion at the full 0.25 m x 1m resolution. When zoomed out of the FIG. 6B image portion, the resulting zoomed-out image may have the same 1 m x 1 m resolution as with the multilooked image in FIG. 6A, with the GIS viewer in this case performing an averaging function equivalent to multilooking. However, since the underlying data has greater resolution, when zoomed into the image (as shown in FIG. 6B), the full resolution of the SAR image data can be viewed, which in this example is 0.25 m x 1 m.

It can be seen that features are sharper in FIG. 6B compared to FIG. 6A. This unexpected benefit occurs because, when the user zooms into the image, the GIS viewer automatically interpolates the amplitude of each pixel (e.g., based on the amplitude values of adjacent or nearby pixels) when the size of a screen pixel is smaller than each image pixel. This allows the user to see the image at the full resolution (albeit with slightly increased speckle), even when the azimuth resolution is considerably finer than the range resolution. When zoomed out, the GIS viewer can automatically average the amplitude values of adjacent or nearby pixels (when the size of a screen pixel is larger than each image pixel), similarly to how multilooking occurs. The SAR image can in this case be viewed as a multilooked GRD image with the benefit of reduced speckle, but without losing any of the underlying resolution usually associated with a GRD image.

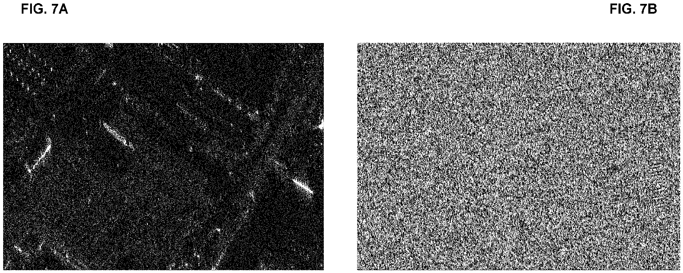

FIGS. 7A and 7B illustrate respective amplitude and phase bands of a SAR image obtained from SAR image data, as described herein. As described previously, the full-resolution SAR image, when stored in a GeoTIFF or other container configured to be read by a GIS viewer, can be readily projected to the ground plane and displayed with different levels of multilooking using a GIS viewer. The phase information does not yield a meaningful image when displayed in the GIS viewer, but is readily available for analysis using other applications and software tools.

The word "a" or "an" when used in conjunction with the term "comprising" or "including" in the claims and/or the specification may mean "one", but it is also consistent with the meaning of "one or more", "at least one", and "one or more than one" unless the content clearly dictates otherwise. Similarly, the word "another" may mean at least a second or more unless the content clearly dictates otherwise.

The terms "coupled", "coupling" or "connected" as used herein can have several different meanings depending on the context in which these terms are used. For example, as used herein, the terms coupled, coupling, or connected can indicate that two elements or devices are directly connected to one another or connected to one another through one or more intermediate elements or devices via a mechanical element depending on the particular context. The term "and/or" herein when used in association with a list of items means any one or more of the items comprising that list.

As used herein, a reference to "about" or "approximately" a number or to being "substantially" equal to a number means being within +/- 10% of that number.

Use of language such as "at least one of X, Y, and Z," "at least one of X, Y, or Z," "at least one or more of X, Y, and Z," "at least one or more of X, Y, and/or Z," or "at least one of X, Y, and/or Z," is intended to be inclusive of both a single item (e.g., just X, or just Y, or just Z) and multiple items (e.g., {X and Y}, {X and Z}, {Y and Z}, or {X, Y, and Z}). The phrase "at least one of" and similar phrases are not intended to convey a requirement that each possible item must be present, although each possible item may be present.

While the disclosure has been described in connection with specific embodiments, it is to be understood that the disclosure is not limited to these embodiments, and that alterations, modifications, and variations of these embodiments may be carried out by the skilled person without departing from the scope of the disclosure.

It is furthermore contemplated that any part of any aspect or embodiment discussed in this specification can be implemented or combined with any part of any other aspect or embodiment discussed in this specification.

**Claims**

1. A method of generating synthetic aperture radar (SAR) image data, comprising:

   obtaining SAR data; and
   generating, based on the SAR data, the SAR image data, comprising:

   for each of a number of pixels, determining, based on the SAR data, an amplitude value and a phase value; and
   generating the SAR image data by storing in a non-transitory, computer-readable storage medium:

   an amplitude data band comprising, for each pixel, the amplitude value of the pixel; and
   a phase data band comprising, for each pixel, the phase value of the pixel.

2. The method of claim 1, wherein:

   the SAR data comprises, for each pixel, a quadrature component and an in-phase component; and
   determining the amplitude value and the phase value comprises, for each pixel, determining, based on the quadrature component and the in-phase component, the amplitude value and the phase value.

3. The method of claim 2, wherein:

   determining the amplitude value comprises determining $\sqrt{|I|^2 + |Q|^2}$, wherein I is the in-phase component of the pixel and Q is the quadrature component of the pixel; and
   determining the phase value comprises determining $\tan^{-1}\left(\frac{Q}{I}\right)$.

4. The method of any one of claims 1-3, wherein storing the SAR image data comprises storing the amplitude data band and the phase data band in a container configured to be read by a geographic information system (GIS) software application.

5. The method of claim 4, wherein the container is a GeoTIFF container.

6. The method of claim 4 or 5, wherein the GIS software application is one selected from the group consisting of: Quantum GIS (QGIS); ArcGIS; Photoshop; SocketGXP; RemoteView; and Erdas Imagine.

7. The method of any one of claims 1-6, wherein obtaining the SAR data comprises:

   emitting radar signals from a SAR radar to image a target location on the Earth's surface;
   receiving reflected and backscattered returns of the radar signals; and
   generating the SAR data based on the reflected and backscattered returns.

8. The method of any one of claims 1-7, further comprising:

   transferring the SAR image data from a first computing device to a second computing device;
   generating, using the second computing device and based on the SAR image data, a SAR image; and
   displaying the SAR image on a display of the second computing device.

9. The method of any one of claims 1-8, further comprising:

   generating, based on the amplitude data band and using a geographic information system (GIS) software application, a SAR image; and
   displaying the SAR image on a display.

10. The method of claim 9, wherein:

    displaying the SAR image comprises displaying the SAR image at a first resolution; and
    in response to receiving a request to zoom into the SAR image, the method further comprises displaying, using the GIS software application, a portion of the SAR image at a second resolution that is higher than the first resolution.

11. The method of claim 9, wherein:

    displaying the SAR image comprises displaying a first portion of the SAR image with a first degree of speckle; and
    in response to receiving a request to zoom out of the first portion of the SAR image, the method further comprises displaying, using the GIS software application, a second portion of the SAR image, wherein the second portion comprises the first portion and is displayed with a second degree of speckle that is less than the first degree of speckle.

12. The method of any one of claims 9-11, wherein:

the SAR data further comprises one or more rapid processing coefficients for projecting each pixel from a slant plane to a ground plane; and generating the SAR image comprises:

generating, based on the SAR image data, a SAR image in the slant plane; and converting, based on the one or more rapid processing coefficients, the SAR image in the slant plane into a SAR image in the ground plane.

13. A non-transitory, computer-readable medium storing synthetic aperture radar (SAR) image data comprising:

an amplitude data band comprising, for each pixel of a SAR image, an amplitude value; and a phase data band comprising, for each pixel of the SAR image, a phase value,

wherein each data band is stored in a container configured to be read by a geographic information system (GIS) software application.

14. The non-transitory, computer-readable medium of claim 13, wherein the container is a GeoTIFF container.

15. The non-transitory, computer-readable medium of claim 13 or 14, wherein the SAR image data further comprises one or more rapid processing coefficients for projecting each pixel from a slant plane to a ground plane.

FIG. 1

**FIG. 2**

**FIG. 3**

I/O Controller
21
1

RAM
206

Processor
202

GPU
212

Non-Volatile
Storage
208

Network
Interface
214

204

216

218

94

FIG. 4A

FIG. 4B

'Q' or 'quadrature' or 'imaginary'

Amplitude

Phase

'I' or 'in-phase' or 'real'

FIG. 4E

FIG. 4C

FIG. 4D

FIG. 5A

FIG. 5B

FIG. 6A

FIG. 6B

FIG. 7A

FIG. 7B

Europäisches
Patentamt

European
Patent Office

Office européen
des brevets

# EUROPEAN SEARCH REPORT

**Application Number**

EP 23 20 0878

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 2021 042989 A (TOSHIBA CORP; TOSHIBA INFRASTRUCTURE SYSTEMS & SOLUTIONS CORP) 18 March 2021 (2021-03-18) * the whole document * ----- | 1-15 | INV. G01S13/90 ADD. G01S7/00 |
| A | Qgis Project: "QGIS User Guide - Release 3.4", Part I, 15 March 2020 (2020-03-15), pages 1-631, XP093137214, Retrieved from the Internet: URL:https://docs.qgis.org/3.4/pdf/en/QGIS-3.4-UserGuide-en.pdf [retrieved on 2024-03-04] * page 13 * * page 31 - page 36 * * page 317 - page 328 * ----- | 1-15 | |
| A | Vincent Pauline ET AL: "Sentinel-1 Product Specification", Ref: S1-RS-MDA-52-7441. Issue/Revision: 3/7, 27 February 2020 (2020-02-27), pages 1-197, XP093137180, Retrieved from the Internet: URL:https://sentinel.esa.int/documents/247904/1877131/Sentinel-1-Product-Specification [retrieved on 2024-03-04] * page 94 - page 97 * * page 124 - page 127 * * page 171 - page 177 * ----- | 1-15 | **TECHNICAL FIELDS SEARCHED (IPC)** G01S G06F |

The present search report has been drawn up for all claims

| Place of search | Date of completion of the search | Examiner |
|---|---|---|
| Munich | 4 March 2024 | Rodríguez González |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
........................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

**EP 23 20 0878**

This annex lists the patent family members relating to the patent documents cited in the above-mentioned European search report.
The members are as contained in the European Patent Office EDP file on
The European Patent Office is in no way liable for these particulars which are merely given for the purpose of information.

**04-03-2024**

| Patent document cited in search report | Publication date | Patent family member(s) | | Publication date |
|---|---|---|---|---|
| JP 2021042989 A | 18-03-2021 | JP | 7346179 B2 | 19-09-2023 |
| | | JP | 2021042989 A | 18-03-2021 |

For more details about this annex : see Official Journal of the European Patent Office, No. 12/82

EPO FORM P0459

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 2212690 A